# EUROPÄISCHE PATENTANMELDUNG

(11) **EP 4 306 290 A1**
(43) Veröffentlichungstag der Anmeldung: **17.01.2024**
(21) Anmeldenummer: 23180552.4
(22) Anmeldetag: 21.06.2023
(51) Int. Cl.: B29C 45/76

(54) **VERFAHREN UND VORRICHTUNG ZUM VISUALISIEREN ODER BEURTEILEN EINES PROZESSZUSTANDES**

(30) Priorität: 11.07.2022 AT 505062022
(71) Anmelder: ENGEL AUSTRIA GmbH, 4311 Schwertberg (AT)
(72) Erfinder: GIESSAUF, Josef, 4320 Perg (AT); DENK, Richard, 4040 Linz (AT)
(74) Vertreter: Torggler & Hofmann Patentanwälte - Innsbruck

(57) **Zusammenfassung**

Verfahren zum Visualisieren der Stabilität eines Prozesszustandes einer Produktionsanlage (1), die mindestens eine in Zyklen arbeitende Formgebungsmaschine (2) und ggf. zumindest ein Peripheriegerät enthält, wobei durch eine Recheneinheit (4) zeitkontinuierlich oder zeitdiskret
- der Wert einer Vielzahl von ausgewählten Prozessgrößen ermittelt wird und vorzugsweise der jeweils aktuelle Wert jeder ausgewählten Prozessgröße oder eine daraus abgeleitete Größe mit einem oder mehreren Referenzwerten verglichen und jeweils wenigstens eine Abweichung oder wenigstens eine Änderungsrate bestimmt wird
- auf Basis der ermittelten Vielzahl von Abweichungen und/oder Änderungsraten eine Stabilität eines aktuellen Prozesszustandes ermittelt wird
wobei
- die Recheneinheit (4) die für verschiedene Zeitpunkte und/oder Zyklen ermittelten Prozesszustände so mittels einer Grafik visualisiert, dass in der Grafik ein Verlauf der Stabilität von Prozesszuständen für eine vorgegebene Zeitspanne und/oder über mehrere Zyklen hinweg erkennbar ist und dass
- die Recheneinheit (4) zusätzlich zur Visualisierung des Verlaufs der Stabilität von Prozesszuständen wenigstens einen Hinweis (9) darauf visualisiert, dass zu einem bestimmten Zeitpunkt oder für eine bestimmte Zeitspanne wenigstens ein Faktor vorlag, welcher für eine Einschätzung des Ergebnisses des Verlaufs der Stabilität relevant ist.

## Beschreibung

Die vorliegende Erfindung betrifft ein Verfahren zum Visualisieren der Stabilität eines Prozesszustandes einer Produktionsanlage, die mindestens eine zyklisch arbeitende Formgebungsmaschine und ggf. zumindest ein Peripheriegerät enthält mit den Merkmalen des Oberbegriffs des Anspruchs 1, eine Vorrichtung zum Visualisieren einer Stabilität eines Prozesszustandes einer solchen Produktionsanlage mit den Merkmalen des Oberbegriffs des Anspruchs 7, eine Produktionsanlage mit einer solchen Vorrichtung, ein Computerprogramm, einen computerlesbarer Datenträger und ein Datenträgersignal.

Verfahren und Vorrichtungen des Standes der Technik bieten die Möglichkeit, hunderte aus Messwerten ermittelte Prozessgrößen in Form von Kennzahlen darzustellen und/oder zu überwachen. Solche Kennzahlen können beispielsweise Minima, Maxima, Mittelwerte oder Integrale von Messkurven, die innerhalb eines zyklischen Produktionsprozesses (Produktionszyklus) aufgezeichnet wurden, sein. Typischerweise liegen solche Kurven als Funktion der Zeit vor. Weitere Kennzahlen können auch Zeitpunkte (ab dem Start der Messung) sein, zu denen die Kurve eine bestimmte Eigenschaft annimmt, also Zeitpunkt des Maximums/Minimums; Zeitpunkt, bei dem das Integral einen bestimmten Wert überschreitet, Zeitpunkt, an dem ein definierter Wert erreicht, überschritten oder unterschritten wird, usw.

Auch aus der Kombination von Messungen mit verschiedenen Sensoren können Kennzahlen abgeleitet werden. Werden z. B. bei einer Kunststoff-Spritzgießmaschine beim Einspritzen die Schneckenposition, der Spritzdruck und der Forminnendruck gemessen, so können über den verbindenden Parameter "Zeit" oder Abfolge von Zyklen Kennzahlen wie die Schneckenposition, an der der maximale Spritzdruck erreicht wird, der Forminnendruck bei vorderster Schneckenposition o. ä. bestimmt werden.

Für Kennzahlen gibt es zunächst (anders als bei Istwerten, für die es üblicherweise einen zugeordneten Sollwert gibt) keinen Erwartungswert, sie ergeben sich oft aus mehreren Faktoren. Als Beispiel sei der maximale Spritzdruck bei einer Kunststoff-Spritzgießmaschine genannt, der sich u. a. aus Einspritzgeschwindigkeit, Geometrie des Formhohlraums, Schmelzeviskosität und Werkzeugtemperatur ergibt. Gerade deshalb sind diese Größen so interessant, da mit ihnen auf nicht messbare oder nicht direkt gemessene Einflussgrößen oder deren Veränderung rückgeschlossen werden kann.

Von besonderem Interesse ist die Frage, wie stabil ein Prozesszustand ist.

Die Stabilität eines Prozesszustandes zu einem aktuellen Zeitpunkt oder in einem aktuellen Zyklus kann zum Beispiel so ermittelt werden:
1. Festlegen oder Ermitteln eines Referenzzeitpunktes (oder -zeitbereichs) oder Referenzzyklus (oder - zyklusbereichs) . Diese Festlegung kann automatisch oder durch den Benutzer erfolgen. Diese Referenz kann bis auf weiteres gleich bleiben oder sich mit der Zeit ändern ("gleitende Referenz").
2. Ermitteln der Referenzwerte für eine Vielzahl von Prozessgrößen und/oder daraus abgeleiteten Größen (z. B. Kennzahlen), daraus ergibt sich ein Referenzzustand für den zu beurteilenden Prozesszustand
3. Festlegen oder Ermitteln der zulässigen Abweichungen oder Änderungsraten der Vielzahl von Prozessgrößen und/oder daraus abgeleiteten Größen
4. Vergleich der aktuellen Werte der Vielzahl von Prozessgrößen und/oder daraus abgeleiteten Größen mit deren zugeordneten Referenzwerten und Bestimmung von Abweichungen oder Änderungsraten. Eine Prozessgröße und/oder daraus abgeleiteten Größe wird als instabil gewertet, wenn ihre Abweichung oder Änderungsrate eine definierte zulässige Abweichung oder Änderungsrate überschreitet
5. Berechnung der Stabilität des Prozesszustandes nach einer definierten Vorschrift. Diese Vorschrift kann die Anzahl der instabilen Parameter, den Grad der Instabilität oder eine Kombination daraus berücksichtigen. Im einfachsten Fall wird der Prozesszustand dann als instabil gewertet, wenn mindestens eine Prozessgröße und/oder daraus abgeleiteten Größe instabil ist.

Ein stabiler Prozesszustand im Sinne der Erfindung ist z. B. erreichbar durch:
- Güte der Prozesseinstellungen: Sollwerte sind so gewählt, dass
   - der Prozess robust gegenüber Umgebungseinflüssen ist
   - sie auch tatsächlich erreicht werden oder erreicht werden können
   - sie im Hinblick auf das verarbeitete Material geeignet sind
- guter Zustand von Elementen der Produktionsanlage (z.B. der Rückstromsperre, des Werkzeugs, etc.)
- guter Zustand des verarbeiteten Materials
- geringer Einfluss von ungemessenen Störgrößen (z.B. Umgebungstemperatur, Zugluft, etc.)

Eine sehr einfache Vorrichtung zum Visualisieren eines Prozesszustandes einer Formgebungsmaschine ist in DE 10 2007 013 044 B4 beschrieben. Dort erfolgt eine Visualisierung eines aus verschiedenen Prozessparametern gebildeten Stabilitätsparameters mit Hilfe einer Ampel. Bei Auftreten von Problemen ist eine Klärung, worin die Ursache des Problems liegt, sehr schwierig.

Dieses Problem wird durch die in EP 3 551 420 A1, EP 3 754 447 A1, EP 3 804 951 A1 und EP 21183477.5 (noch unveröffentlicht) offenbarten Verfahren und Vorrichtungen zum Visualisieren und/oder Beurteilen eines Zustandes einer Produktionsanlage behoben.

In EP 3 551 420 A1erfolgt eine Zusammenführung der Beurteilung einzelner Prozessgrößen in mehreren Hierarchieebenen, wodurch einem Benutzer ein strukturierter Gesamtüberblick über den Zustand eines Prozesses geboten wird, ausgehend von welchem sich der Benutzer entlang der hierarchischen Struktur in verschiedenen Ebenen bis hin zu den einzelnen Prozessgrößen einen Eindruck vom Zustand des Prozesszustandes der Produktionsanlage machen kann.

Das in EP 3 754 447 A1 und EP 3 804 951 A1 offenbarte Verfahren ermöglicht es, unter Berücksichtigung wenigstens eines Prozessgrößensatzes (das sind wenigstens zwei verschiedene Prozessgrößen der Produktionsanlage oder wenigstens eine Prozessgröße mit wenigstens einer abgeleiteten Größe) zumindest einen tatsächlichen Prozesszustand derart zu klassifizieren, dass Maßnahmen in Bezug auf den zumindest einen Prozesszustand aufgezeigt werden können und Informationen zum tatsächlich vorliegenden Prozesszustand ausgegeben werden.

In EP 21183477.5 erfolgt eine Reduktion der prozessualen Anforderungen an eine Recheneinheit bei Ausführung eines der in EP 3 551 420 A1, EP 3 754 447 A1 oder EP 3 804 951 beschriebenen Verfahrens, weil nur ausgewählte Prozessgrößen verarbeitet werden.

Obwohl die bisher beschriebenen Verfahren einen wesentlichen Vorteil bei der Visualisierung und/oder Beurteilung eines Prozesszustandes einer Produktionsanlage gegenüber dem früheren Stand der Technik bieten, da es möglich ist, durch die Überwachung hunderter Prozessgrößen eine fast vollständige Transparenz eines Prozesszustandes einer Produktionsanlage zu erhalten, wäre es wünschenswert, einem Benutzer weitere Informationen bieten zu können, um eine Gefahr einer Fehlinterpretation der Instabilität eines Prozesszustandes zu reduzieren.

Aufgabe der Erfindung ist die Bereitstellung eines Verfahrens und einer Vorrichtung, bei welchen die Gefahr einer Fehlinterpretation einer Instabilität eines Prozesszustandes reduziert ist.

Diese Aufgabe wird durch ein Verfahren mit den Merkmalen des Anspruchs 1, eine Vorrichtung mit den Merkmalen des Anspruchs 7, eine Produktionsanlage mit einer solchen Vorrichtung, ein Computerprogramm mit den Merkmalen des Anspruchs 14, ein computerlesbarer Datenträger mit den Merkmalen des Anspruchs 15 und ein Datenträgersignal mit den Merkmalen des Anspruchs 16 gelöst. Vorteilhafte Ausführungsformen der Erfindung sind in den abhängigen Ansprüchen definiert.

Bei dem Verfahren zum Visualisieren der Stabilität eines Prozesszustandes einer Produktionsanlage, die mindestens eine in Zyklen arbeitende Formgebungsmaschine und ggf. zumindest ein Peripheriegerät enthält, ist vorgesehen, dass
- durch eine Recheneinheit zeitkontinuierlich oder zeitdiskret
   - der Wert einer Vielzahl von ausgewählten Prozessgrößen ermittelt wird und der, vorgzugsweise jeweils aktuelle, Wert jeder ausgewählten Prozessgröße oder eine daraus abgeleitete Größe mit einem oder mehreren Referenzwerten verglichen und jeweils wenigstens eine Abweichung oder wenigstens eine Änderungsrate bestimmt wird und
   - auf Basis der ermittelten Vielzahl von Abweichungen oder Änderungsraten eine Stabilität eines aktuellen Prozesszustandes ermittelt wird
- die Recheneinheit die für verschiedene Zeitpunkte und/oder Zyklen ermittelten Prozesszustände so mittels einer (auf einen Blick erfassbaren) Grafik visualisiert, dass in der Grafik ein Verlauf der Stabilität von Prozesszuständen für eine vorgegebene Zeitspanne und/oder über mehrere Zyklen hinweg erkennbar ist und
- die Recheneinheit, zusätzlich zur Visualisierung des Verlaufs der Stabilität von Prozesszuständen einen Hinweis darauf visualisiert, dass zu einem bestimmten Zeitpunkt oder für einem bestimmte Zeitspanne wenigstens ein Faktor vorlag, welcher für eine Einschätzung des Ergebnisses des Verlaufs der Stabilität relevant ist

Die Vorrichtung zum Visualisieren der Stabilität eines Prozesszustandes einer Produktionsanlage, die mindestens eine zyklisch arbeitende Formgebungsmaschine und ggf. zumindest ein Peripheriegerät enthält, weist zumindest auf:
- eine Anzeigevorrichtung
- eine Recheneinheit, welche mit der Anzeigevorrichtung in einer datenübertragenden Verbindung steht oder dazu konfiguriert ist, in eine datenübertragende Verbindung mit der Anzeigevorrichtung gebracht zu werden und die dazu konfiguriert ist, zeitkontinuierlich oder zeitdiskret
   - den Wert einer Vielzahl von ausgewählten Prozessgrößen der Produktionsanlage zu ermitteln und den, vorzugsweise jeweils aktuellen, Wert jeder ausgewählten Prozessgröße oder eine daraus abgeleitete Größe mit einem oder mehreren Referenzwerten zu vergleichen und jeweils eine Abweichung oder eine Änderungsrate zu bestimmen
   - auf Basis der ermittelten Vielzahl von Abweichungen und/oder Änderungsraten eine Stabilität eines aktuellen Prozesszustandes ermittelt wird
- die Recheneinheit ist des Weiteren dazu konfiguriert
   - die für verschiedene Zeitpunkte und/oder Zyklen ermittelten Prozesszustände so mittels einer (auf einen Blick erfassbaren) Grafik zu visualisieren, dass in der Grafik ein Verlauf der Stabilität von Prozesszuständen für eine vorgegebene Zeitspanne und/oder über mehrere Zyklen hinweg erkennbar ist und
   - zusätzlich zur Visualisierung des Verlaufs der Stabilität von Prozesszuständen einen dem bestimmten Zeitpunkt oder der bestimmten Zeitspanne zugeordneten Hinweis darauf zu visualisieren, dass zu dem bestimmten Zeitpunkt oder für die bestimmte Zeitspanne wenigstens ein Faktor vorlag, welcher für eine Einschätzung des Ergebnisses des Verlaufs der Stabilität relevant ist

Beispiele für den wenigstens ein Faktor, welcher für eine Einschätzung des Ergebnisses des Verlaufs der Stabilität relevant ist, sind:
- eine Sonderbetriebsart der Produktionsanlage und/oder
- eine Sollwertänderung und/oder
- eine Änderung der Konfiguration der Produktionsanlage (z. B. Änderung eines montierten Formwerkzeuges, Änderung der eingesetzten Peripheriegeräte, Austausch einer Komponente der Formgebungsmaschine wie Massezylinder, Schnecke usw.) und/oder
- eine Änderung des Benutzers und/oder
- eine Änderung der Regelungsart (z. B. Wechseln der geregelten Größe, wie von Durchflussmenge eines Temperiergerätes auf Temperaturdifferenz des Temperiermediums usw.) und/oder
- eine Änderung eines Ablaufes von Bewegungen und/oder
- aktive Alarme der Formgebungsmaschine oder eines ggf. vorhandenen Peripheriegerätes und/oder
- Wechsel der Betriebsart eines ggf. vorhandenen Peripheriegeräts (z. B. Einschalten eines Materialfördergerätes) und/oder
- manuelle oder automatische Wartungs- oder Instandhaltungsmaßnahmen (z. B. automatische Schmierung ist aktiv) und/oder
- von einem Benutzer editierte Kommentare

Der wenigstens eine Faktor stellt eine mögliche Erklärung dafür dar, warum sich die Stabilität geändert hat. Er ist relevant für eine Einschätzung des Ergebnisses des Verlaufs der Stabilität, weil die durch ihn repräsentierten Ereignisse, Vorgänge oder Zustände darauf hindeuten, dass eine Verschlechterung der Stabilität auf einen äußeren Eingriff zurückzuführen ist und nicht auf eine intrinsische Problematik der Produktionsanlage.

Weiß ein Benutzer z. B., dass eine Sollwertänderung stattgefunden hat, so versteht er, dass eine darauffolgende verschlechterte Stabilität auf Einschwingvorgänge zurückzuführen ist.

Wenn davon die Rede ist, dass der Wert einer Vielzahl von ausgewählten Prozessgrößen ermittelt wird und der Wert jeder ausgewählten Prozessgröße oder eine daraus abgeleitete Größe mit einem oder mehreren Referenzwerten verglichen und jeweils wenigstens eine Abweichung oder wenigstens eine Änderungsrate bestimmt wird, kann dies bedeuten:
- Vergleich der zu einem bestimmten Zeitpunkt oder Zyklus vorliegenden aktuellen Werte mit einem oder mehreren Referenzwerten
- Vergleich der über eine bestimmte Zeitspanne oder Anzahl von Zyklen vorliegenden aktuellen Werte mit einem oder mehreren Referenzwerten, beispielsweise Vergleich von über die bestimmte Zeitspanne oder Anzahl von Zyklen gemittelte Werte mit dem einen oder mehreren Referenzwerten

Die Ermittlung der Stabilität eines Prozesszustandes kann z. B. so wie in der Beschreibungseinleitung beschrieben erfolgen.

Ein solches Verfahren und eine solche Vorrichtung bieten nicht nur einen schnellen Überblick über den Verlauf der Stabilität des (globalen) Prozesszustandes der Produktionsanlage über Zeit oder Zyklen, sondern ermöglichen es durch den visualisierten Hinweis, einen Benutzer darauf hinzuweisen, dass zu einem bestimmten Zeitpunkt oder für eine bestimmte Zeitspanne eine Sonderbetriebsart und/oder eine Sollwertänderung der Produktionsanlage vorlag und daher eine allfällige Instabilität der Prozesszustandes für diesen Zeitpunkt bzw. diese Zeitspanne nicht besorgniserregend ist.

Mit der Überwachung hunderter Parameter hält eine ungekannte Transparenz Einzug in den Formgebungsprozess. Diese kann, speziell bei nachträglicher Prozessanalyse, zu Fehlinterpretationen (Über-Detektionen) führen, wenn ein anderer als die reguläre Betriebsart in Form des regulären Produktionsmodus (also eine Sonderbetriebsart und/oder eine Sollwertänderung) aktiv ist, wie z. B. bei:
- im Hintergrund automatisch durchgeführten Optimierungen durch Assistenzsysteme
- Prozessoptimierung durch den Benutzer
- Anfahren nach Stillstand

Diese genannten Umstände führen üblicherweise dazu, dass eine Abweichung detektiert und visualisiert wird, die ja auch tatsächlich vorliegt, jedoch keinen Fehler oder kein Problem als Ursache hat.

Die Auswahl der durch den visualisierten Hinweis gelieferten Zusatzinformation erfolgt so, dass ein "drill-down" durch den Benutzer von der globalen Information zu Detailinformationen in einer Vielzahl von zu erwartenden Situationen nicht notwendig ist, da die Zusatzinformation in der Lage ist, die Erklärung für ein Abweichen des globalen Prozesszustandes vom stabilen Idealzustand zu liefern. Die Visualisierung macht die Abfolge von Informationen auf einen Blick erfassbar.

Die Darstellung einer Änderung kann z. B. so erfolgen, dass der Benutzer unmittelbar auf die Änderung selbst hingewiesen wird, oder dass der Vorher-Zustand in der Nähe des Nachher-Zustands visualisiert wird.

Bei manchen Ausführungsformen des Verfahrens und der Vorrichtung ist vorgesehen, dass die Visualisierung der Stabilität von Prozesszuständen in Form eines Balkens erfolgt, dessen Länge den Verlauf der Zeit oder der Zyklen darstellt, wobei Zeitpunkte oder Zeitspannen unterschiedlicher Stabilität visualisiert werden durch
- Markierungen oder alphanumerische Angaben unterhalb und/oder oberhalb und/oder innerhalb des Balkens und/oder
- eine unterschiedliche grafische Ausgestaltung des Balkens (insbesondere durch verschiedene Farben, z. B. grüne Farbe bei Vorliegen von Stabilität und orange oder rote Farbe bei Vorliegen von Instabilität)

Es kann vorgesehen sein, dass auch ein Grad der Instabilität visualisiert wird, z. B. durch eine Intensität einer Farbe, der Visualisierung einer Anzahl instabiler Prozessgrößen oder durch Visualisierung eines bevorzugt normierten und aufsummierten Abstandes von Istwerten zu Referenzwerten.

Bei manchen Ausführungsformen des Verfahrens und der Vorrichtung ist vorgesehen, dass eine Sonderbetriebsart der Produktionsanlage vorliegt in Form wenigstens einer der nachstehenden Angaben:
- Änderung der Produktionsart, Änderung der Komponenten der Produktionszelle, insbesondere des Werkzeugs oder der Peripheriegeräte, Änderung des Bedienpersonals, Änderung einer Regelungsart, Änderung des Ablaufs, Durchführung von Wartungen, Kommentare des Benutzers, Überschreiten von Überwachungs- oder Warngrenzen, Ausschuss
- Einfahrzyklen oder automatische Prozessoptimierungen durch Assistenzsysteme, Aktivität von Peripheriegeräten (z. B. Materialfördergeräten), automatische Durchführung regelmäßiger Vorgänge wie Schmierung von Komponenten
- Regelungsart eines Durchflussreglers oder Regelungsart eines Prozessreglers, beispielsweise zur automatischen Regelung eines eingespritzten Volumens, Vorliegen von Alarmen an der Formgebungsmaschine oder eines Peripheriegerätes (z. B. wie in EP 2 583 811 B1 beschrieben)

Bei manchen Ausführungsformen des Verfahrens und der Vorrichtung ist vorgesehen (einzeln oder in beliebiger Kombination), dass
- Ereignisse, Vorgänge oder Zustände durch Piktogramme visualisiert werden
- Hinweise visualisiert werden, auch wenn alles stabil ist; sie können aber auch direkt die Erklärung für eine instabile Phase liefern
- Zusatzinformationen der Hinweise sinnvoll kombiniert in einer gemeinsamen oder in mehreren getrennten Bahnen ("swimlanes") und/oder als Überlagerung zur Beurteilung des Prozesszustandes visualisiert werden

Bei manchen Ausführungsformen des Verfahrens und der Vorrichtung ist vorgesehen, dass
- jede ausgewählte Prozessgröße durch die Recheneinheit wenigstens einer logischen Gruppe zugeordnet wird, wobei zumindest zwei verschiedene logische Gruppen vorgesehen werden
- vorzugsweise vorgesehen ist, dass logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist
- für jede logische Gruppe durch die Recheneinheit ein Zustand der logischen Gruppe auf Basis der dieser logischen Gruppe zugeordneten Prozessgrößen beurteilt und/oder visualisiert wird

Auf diese Weise wird die Erfindung bei einem Verfahren oder einer Vorrichtung gemäß EP 3 551 420 A1, EP 3 754 447 A1, EP 3 804 951 A1 oder EP 21183477.5 umgesetzt.

Jede Produktionsanlage weist eine (bevorzugt nur eine) zyklisch arbeitende Formgebungsmaschine auf. Eine zyklisch arbeitende Formgebungsmaschine kann natürlich mehrere zyklisch arbeitende Untereinheiten, insbesondere mehrere zyklisch arbeitende Plastifizier- und/oder Einspritzeinheiten aufweisen. In diesem Fall ist unter dem Zyklus der Produktionsanlage jene Zeitspanne zu verstehen, die sich unter Berücksichtigung aller zyklisch arbeitender Untereinheiten ergibt.

Optional weist die Produktionsanlage auch der Formgebungsmaschine vor- und nachgeschaltete oder parallellaufende Maschinen, Vorrichtungen und Geräte auf, die jeweils Prozessgrößen zur Verfügung stellen können und bevorzugt mit Sensoren zur Ermittlung von Messdaten ausgestattet sind. Beispiele dafür sind, neben Peripheriegeräten, Geräte und Anlagen zur Versorgung der Formgebungsmaschine oder des Formgebungswerkzeugs (Kühl- und Temperiergeräte, Materialförderer, Dosier- und Mischanlagen), zur Aufbereitung des Rohmaterials (Trockner, Entstauber), Geräte zur Manipulation der Formteile (Roboter, Förderbänder, Separierweichen), Anlagen zur Qualitätsprüfung (optische Bildverarbeitung, Waagen, Messeinrichtungen), Anlagen zur Weiterverarbeitung oder Weiterbearbeitung der Formteile oder Systeme zur Messung zusätzlicher Prozessgrößen aus dem Werkzeug (Forminnendruck, Temperatur, Werkzeugatmung oder -dehnung) oder der Umgebung.

Der Begriff Produktionsanlage ist zu unterscheiden vom Begriff Produktionsstandort, welcher in einem räumlich umrissenen Gebiet (z. B. einer Produktionshalle) eine Vielzahl von Produktionsanlagen aufweist. Die Erfindung bezieht sich auf eine Produktionsanlage, kann aber natürlich bei beliebig vielen Produktionsanlagen eingesetzt werden.

Bevorzugt handelt es sich bei der Formgebungsmaschine um eine Spritzgießmaschine, besonders bevorzugt um eine Kunststoff-Spritzgießmaschine.

Bevorzugt handelt es sich bei dem ggf. vorhandenen zumindest einen Peripheriegerät um eine Handlingvorrichtung (z. B. Roboter).

Die Recheneinheit und/oder die Speichereinheit können bzw. kann in räumlicher Einheit mit der Produktionsanlage angeordnet sein, bevorzugt in baulicher Einheit mit der Formgebungsmaschine und/oder mit dem ggf. vorhandenen wenigstens einen Peripheriegerät (z. B. als Teil einer Maschinensteuerung der Produktionsanlage). Die Recheneinheit und/oder die Speichereinheit können bzw. kann aber zusätzlich oder alternativ räumlich fern der Produktionsanlage angeordnet sein (Cloud-Lösung) oder sich in einem gemeinsamen (beispielsweise lokalen) Netzwerk mit einer oder mehreren Produktionsanlagen befinden.

Die Ausgabevorrichtung kann einen Bildschirm aufweisen und ggf. eine Signalerzeugungsvorrichtung zur Erzeugung und Abgabe akustischer oder visueller Signale. Die Ausgabevorrichtung kann als Benutzerschnittstelle der Produktionsanlage ausgebildet sein.

Beispiele für Formgebungsmaschinen sind Spritzgießmaschinen, insbesondere Kunststoff-Spritzgießmaschinen, Spritzpressen und Spritzprägemaschinen.

Im Rahmen der vorliegenden Offenbarung kann jeder Verweis auf eine Produktionsanlage als Verweis nur auf die Formgebungsmaschine der Produktionsanlage, nur auf das ggf. vorhandene wenigstens eine Peripheriegerät oder auf die Gesamtheit von Formgebungsanlage und wenigstens einem Peripheriegerät verstanden werden.

Daher kann im Rahmen der vorliegenden Offenbarung jeder Verweis auf die Stabilität des Prozesszustandes einer Produktionsanlage als Verweis nur auf die Stabilität des Prozesszustandes einer Formgebungsmaschine der Produktionsanlage, nur auf die Stabilität des Prozesszustandes eines ggf. vorhandenen wenigstens einen Peripheriegeräts oder auf die Stabilität des Prozesszustandes der Gesamtheit von Formgebungsanlage und wenigstens einem Peripheriegerät verstanden werden.

Ausführungsbeispiele der Erfindung werden anhand der Figuren diskutiert. Es zeigen:
- Fig. 1: eine schematische Darstellung einer Produktionsanlage
- Fig. 2: ein Ausführungsbeispiel einer Anzeigevorrichtung mit visualisierter Stabilität des Prozesszustandes und zusätzlich visualisiertem Hinweis zu Sonderbetriebsarten

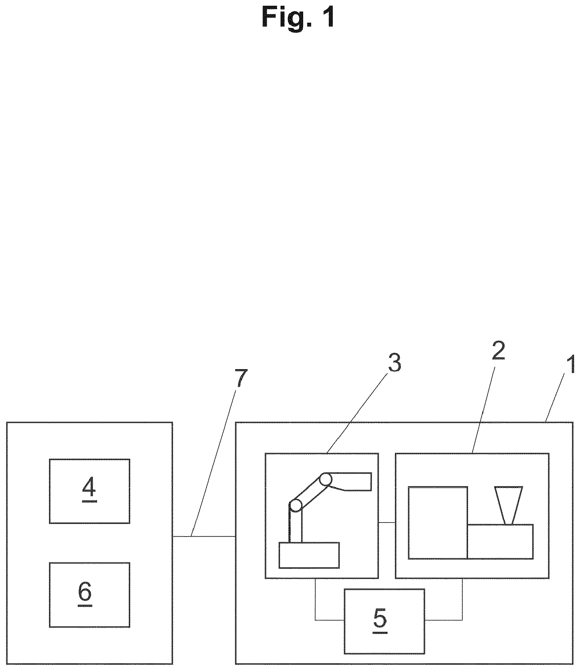

Die in Fig. 1 beispielhaft gezeigte Produktionsanlage 1 zeigt eine Formgebungsmaschine 2 und eine Handlingvorrichtung 3. Eine Recheneinheit 4 und ein Speichermedium 6, in welchem ein erfindungsgemäßes Computerprogramm gespeichert ist, sind über eine Datenverbindung 7 mit einer Anzeigevorrichtung 5 verbunden. Die Anzeigevorrichtung 5 kann in jeder bekannten Weise ausgebildet sein. Anders als dargestellt, kann die Recheneinheit 4 und/oder das Speichermedium 6 ein Teil der Formgebungsmaschine 2, beispielsweise ein Teil der Maschinensteuerung sein.

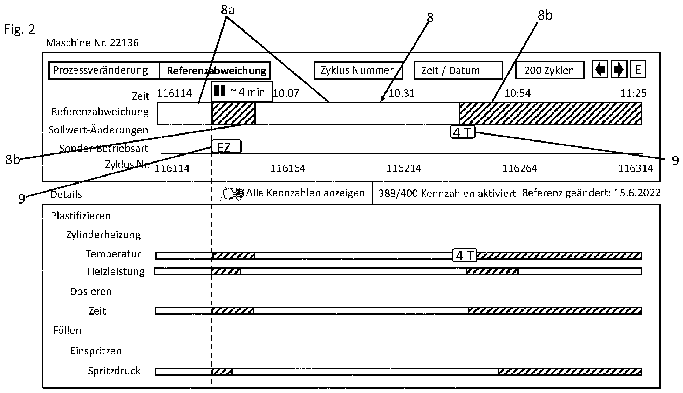

Fig. 2 zeigt in einem oberen Bereich einer Grafik die Visualisierung der Stabilität eines Prozesszustandes mittels eines Balkens 8, welcher unterschiedlich gefärbte Bereiche 8a, 8b aufweist, wobei die Farbe die Stabilität oder Instabilität signalisiert. In den Bahnen "Sollwert-Änderungen" und "Sonder-Betriebsart" sind mittels visualisierter Hinweise 9 Zusatzinformationen zu den für eine Beurteilung des Verlaufs der Stabilität relevanten Faktoren dargestellt, welche die Interpretation unterstützen, indem sie die Bereiche mit instabilem Prozesszustand relativieren. So weist "EZ" auf Einfahrzyklen hin und "4T" darauf, dass im Bereich "Temperatur" vier Sollwertänderungen durchgeführt wurden.

Im vorliegenden Ausführungsbeispielen stehen zwei verschiedene Arten von Überwachung zur Verfügung, einmal die "Prozessveränderung", bei welcher ein Vergleich mit unmittelbar vorhergehenden Zyklen erfolgt (mitgleitender Vergleichszeitpunkt) und einmal die "Referenzabweichung", bei welcher ein Vergleich mit einem oder mehreren festen Referenzzuständen erfolgt.

Im vorliegenden Beispiel werden 388 von 400 möglichen Kennzahlen für die Bestimmung der Stabilität berücksichtigt, weil sie vom Benutzer aktiviert (oder nicht deaktiviert) wurden.

Mittels eines Filters kann ausgewählt werden, ob nur die im aktuellen Betrachtungsfenster mindestens einmal instabilen Kennzahlen angezeigt werden sollen oder alle aktivierten Parameter (Schalter "Alle Kennzahlen anzeigen").

Im unteren Bereich sind optionale Details dargestellt, wie dies aus dem eingangs zitierten Stand der Technik der Anmelderin bekannt ist. Erkennbar ist, dass hier die Stabilität auf möglichst einfache Weise so ermittelt wurde, dass eine Instabilität dann als erkannt angesehen wird, wenn auch nur eine der überwachten Prozessgrößen (hier z. B. Gruppen von Temperatur-Prozessgrößen) mehr als einen vorgegebenen Abstand von einem Sollwert abweicht.

### Bezugszeichenliste und Terminologie:

- 1: Produktionsanlage
- 2: Formgebungsmaschine
- 3: Handlingvorrichtung
- 4: Recheneinheit
- 5: Anzeigevorrichtung
- 6: Speichermedium
- 7: Datenverbindung
- 8: Balken
8a Bereich des Balkens mit stabilem Prozesszustand
8b Bereich des Balkens mit instabilem Prozesszustand
- 9: Hinweis
- Messwert: von einem Sensor gelieferter Wert oder auf Basis der vom Sensor gelieferten Signale bestimmter Wert einer physikalischen Größe der Produktionsanlage, einer ihrer Komponenten oder des verarbeiteten Materials
- Prozessgröße: aus Messwert(en) ermittelte Größe, kann in Form einer oder mehrerer Kennzahlen dargestellt werden
- Prozesszustand: spiegelt die Situation der Produktionsanlage bezüglich wenigstens eines Parameters, bevorzugt im Hinblick auf eine Vielzahl von Parametern, während des in Formgebungszyklen verlaufenden Fertigungsprozesses wider; der Terminus Prozesszustand kann sich nur auf die Formgebungsmaschine der Produktionsanlage, nur auf das ggf. vorhandene wenigstens eine Peripheriegerät oder auf die Gesamtheit von Formgebungsanlage und wenigstens einem Peripheriegerät beziehen
- Stabilität: in Bezug auf einen Prozesszustand eine Aussage darüber, ob und ggf. bis zu welchem Grad sich der Prozesszustand im Vergleich zu wenigstens einem Referenzzustand geändert hat
- Kennzahl: aus Prozessgröße ermittelte Größe, wie z. B. aus Messkurven ermittelte Messwerte, Eigenschaften von Messkurven; Zeitpunkt, bei dem Messgrößen bestimmten Werte einnimmt, usw.
- Sollwert: Einstellgröße für die Produktionsanlage
- Referenzwert: Wert, der zu einem Vergleich mit einer Prozessgröße herangezogen wird
- Referenzzustand: Kombination von Referenzwerten zu einem bestimmten Zeitpunkt, welcher den Zustand der Produktionsanlage oder von Teilen davon zu diesem Zeitpunkt charakterisiert

## Patentansprüche

1. Verfahren zum Visualisieren der Stabilität eines Prozesszustandes einer Produktionsanlage (1), die mindestens eine in Zyklen arbeitende Formgebungsmaschine (2) und ggf. zumindest ein Peripheriegerät enthält, wobei durch eine Recheneinheit (4) zeitkontinuierlich oder zeitdiskret
- der Wert einer Vielzahl von ausgewählten Prozessgrößen ermittelt wird und vorzugsweise der jeweils aktuelle Wert jeder ausgewählten Prozessgröße oder eine daraus abgeleitete Größe mit einem oder mehreren Referenzwerten verglichen und jeweils wenigstens eine Abweichung oder wenigstens eine Änderungsrate bestimmt wird
- auf Basis der ermittelten Vielzahl von Abweichungen und/oder Änderungsraten eine Stabilität eines aktuellen Prozesszustandes ermittelt wird
**dadurch gekennzeichnet, dass**
- die Recheneinheit (4) die für verschiedene Zeitpunkte und/oder Zyklen ermittelten Prozesszustände so mittels einer Grafik visualisiert, dass in der Grafik ein Verlauf der Stabilität von Prozesszuständen für eine vorgegebene Zeitspanne und/oder über mehrere Zyklen hinweg erkennbar ist und dass
- die Recheneinheit (4) zusätzlich zur Visualisierung des Verlaufs der Stabilität von Prozesszuständen wenigstens einen Hinweis (9) darauf visualisiert, dass zu einem bestimmten Zeitpunkt oder für eine bestimmte Zeitspanne wenigstens ein Faktor vorlag, welcher für eine Einschätzung des Ergebnisses des Verlaufs der Stabilität relevant ist.

2. Verfahren nach dem vorangehenden Anspruch, wobei der wenigstens eine Faktor, welcher für eine Einschätzung des Ergebnisses des Verlaufs der Stabilität relevant ist, ist:
- eine Sonderbetriebsart der Produktionsanlage und/oder
- eine Sollwertänderung und/oder
- eine Änderung der Konfiguration der Produktionsanlage (z. B. Änderung eines montierten Formwerkzeuges, Änderung der eingesetzten Peripheriegeräte, Austausch einer Komponente der Formgebungsmaschine wie Massezylinder, Schnecke usw.) und/oder
- eine Änderung des Benutzers und/oder
- eine Änderung der Regelungsart (z. B. Wechseln der geregelten Größe, wie von Durchflussmenge eines Temperiergerätes auf Temperaturdifferenz des Temperiermediums usw.) und/oder
- eine Änderung eines Ablaufes von Bewegungen und/oder
- aktive Alarme der Formgebungsmaschine oder eines ggf. vorhandenen Peripheriegerätes und/oder
- Wechsel der Betriebsart eines ggf. vorhandenen Peripheriegeräts (z. B. Einschalten eines Materialfördergerätes) und/oder
- manuelle oder automatische Wartungs- oder Instandhaltungsmaßnahmen (z. B. automatische Schmierung ist aktiv) und/oder
- von einem Benutzer editierte Kommentare

3. Verfahren nach einem der beiden vorangehenden Ansprüche, wobei die Visualisierung der Stabilität von Prozesszuständen in Form eines Balkens (8) erfolgt, dessen Länge den Verlauf der Zeit oder der Zyklen darstellt, wobei Zeitpunkte oder Zeitspannen unterschiedlicher Stabilität visualisiert werden durch
- Markierungen oder alphanumerische Angaben unterhalb und/oder oberhalb und/oder innerhalb des Balkens und/oder
- eine unterschiedliche grafische Ausgestaltung von Bereichen (8a, 8b) des Balkens (8)
wobei vorzugsweise vorgesehen ist, dass auch ein Grad der Instabilität visualisiert wird, besonders bevorzugt durch eine Intensität einer Farbe, der Visualisierung einer Anzahl instabiler Prozessgrößen oder durch Visualisierung eines bevorzugt normierten und aufsummierten Abstandes von Istwerten zu Referenzwerten

4. Verfahren nach wenigstens einem der vorangehenden Ansprüche, wobei eine Sonderbetriebsart der Produktionsanlage (1) vorliegt in Form wenigstens einer der nachstehenden Angaben:
- Änderung der Produktionsart, Änderung der Komponenten der Produktionszelle, insbesondere des Werkzeugs oder der Peripheriegeräte, Änderung des Bedienpersonals, Änderung einer Regelungsart, Änderung des Ablaufs, Durchführung von Wartungen, Kommentare des Benutzers, Überschreiten von Überwachungs- oder Warngrenzen, Ausschuss
- Einfahrzyklen oder automatische Prozessoptimierungen durch Assistenzsysteme, Aktivität von Peripheriegeräten (z.B. Materialfördergeräten), automatische Durchführung regelmäßiger Vorgänge wie Schmierung von Komponenten
- Regelungsart eines Durchflussreglers oder Regelungsart eines Prozessreglers, beispielsweise zur automatischen Regelung eines eingespritzten Volumens, Vorliegen von Alarmen an der Formgebungsmaschine oder eines Peripheriegerätes

5. Verfahren nach wenigstens einem der vorangehenden Ansprüche, wobei die Visualisierung des Hinweises (9) nur für den Fall erfolgt, dass eine Beeinträchtigung einer Stabilität des Prozesszustandes zu einem bestimmten Zeitpunkt oder für eine bestimmte Zeitspanne vorliegt, insbesondere dann, wenn sie auf einen der für die Beurteilung relevanten Faktoren zurückzuführen ist.

6. Verfahren nach wenigstens einem der vorangehenden Ansprüche, wobei
- jede ausgewählte Prozessgröße durch die Recheneinheit (4) wenigstens einer logischen Gruppe zugeordnet wird, wobei zumindest zwei verschiedene logische Gruppen vorgesehen werden
- vorzugsweise vorgesehen ist, dass logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist
- für jede logische Gruppe durch die Recheneinheit (4) ein Zustand der logischen Gruppe auf Basis der dieser logischen Gruppe zugeordneten Prozessgrößen beurteilt und/oder visualisiert wird

7. Vorrichtung zum Visualisieren der Stabilität eines Prozesszustandes einer Produktionsanlage (1), die mindestens eine zyklisch arbeitende Formgebungsmaschine (2) und ggf. zumindest ein Peripheriegerät enthält, insbesondere zur Durchführung eines Verfahrens nach zumindest einem der vorangehenden Ansprüche, mit:
- einer Anzeigevorrichtung (5)
- einer Recheneinheit (4), welche mit der Anzeigevorrichtung (5) über eine Datenverbindung (7) in einer datenübertragenden Verbindung steht oder dazu konfiguriert ist, in eine datenübertragende Verbindung mit der Anzeigevorrichtung (5) gebracht zu werden und die dazu konfiguriert ist, zeitkontinuierlich oder zeitdiskret
• den Wert einer Vielzahl von ausgewählten Prozessgrößen der Produktionsanlage (1) zu ermitteln und, vorzugsweise den jeweils aktuellen, Wert jeder ausgewählten Prozessgröße oder eine daraus abgeleitete Größe mit einem oder mehreren Referenzwerten zu vergleichen und jeweils eine Abweichung oder eine Änderungsrate zu bestimmen
• auf Basis der ermittelten Vielzahl von Abweichungen und/oder Änderungsraten eine Stabilität eines aktuellen Prozesszustandes ermittelt wird
**dadurch gekennzeichnet, dass** die Recheneinheit (4) des Weiteren dazu konfiguriert ist
- die für verschiedene Zeitpunkte und/oder Zyklen ermittelten Prozesszustände so mittels einer Grafik zu visualisieren, dass in der Grafik ein Verlauf der Stabilität von Prozesszuständen für eine vorgegebene Zeitspanne und/oder über mehrere Zyklen hinweg erkennbar ist und
- zusätzlich zur Visualisierung des Verlaufs der Stabilität von Prozesszuständen wenigstens einen Hinweis (9) darauf zu visualisieren, dass zu einem bestimmten Zeitpunkt oder für eine bestimmte Zeitspanne wenigstens ein Faktor vorlag, welcher für eine Einschätzung des Ergebnisses des Verlaufs der Stabilität relevant ist.

8. Vorrichtung nach dem vorangehenden Anspruch, wobei der wenigstens eine Faktor, welcher für eine Einschätzung des Ergebnisses des Verlaufs der Stabilität relevant ist, ist:
- eine Sonderbetriebsart der Produktionsanlage und/oder
- eine Sollwertänderung und/oder
- eine Änderung der Konfiguration der Produktionsanlage (z. B. Änderung eines montierten Formwerkzeuges, Änderung der eingesetzten Peripheriegeräte, Austausch einer Komponente der Formgebungsmaschine wie Massezylinder, Schnecke usw.) und/oder
- eine Änderung des Benutzers und/oder
- eine Änderung der Regelungsart (z. B. Wechseln der geregelten Größe, wie von Durchflussmenge eines Temperiergerätes auf Temperaturdifferenz des Temperiermediums usw.) und/oder
- eine Änderung eines Ablaufes von Bewegungen und/oder
- aktive Alarme der Formgebungsmaschine oder eines ggf. vorhandenen Peripheriegerätes und/oder
- Wechsel der Betriebsart eines ggf. vorhandenen Peripheriegeräts (z. B. Einschalten eines Materialfördergerätes) und/oder
- manuelle oder automatische Wartungs- oder Instandhaltungsmaßnahmen (z. B. automatische Schmierung ist aktiv) und/oder
- von einem Benutzer editierte Kommentare

9. Vorrichtung nach einem der beiden vorangehenden Ansprüche, wobei die Recheneinheit (4) dazu konfiguriert ist, die Visualisierung der Stabilität von Prozesszuständen in Form eines Balkens (8) vorzunehmen, dessen Länge den Verlauf der Zeit oder der Zyklen darstellt, wobei Zeitpunkte oder Zeitspannen unterschiedlicher Stabilität visualisiert werden durch
- Markierungen oder alphanumerische Angaben unterhalb und/oder oberhalb und/oder innerhalb des Balkens (8) und/oder
- eine unterschiedliche grafische Ausgestaltung von Bereichen (8a, 8b) des Balkens (8)
wobei vorzugsweise vorgesehen ist, dass auch ein Grad der Instabilität visualisiert wird, besonders bevorzugt durch eine Intensität einer Farbe, der Visualisierung einer Anzahl instabiler Prozessgrößen oder durch Visualisierung eines bevorzugt normierten und aufsummierten Abstandes von Istwerten zu Referenzwerten.

10. Vorrichtung nach wenigstens einem der Ansprüche 7 bis 9, wobei eine Sonderbetriebsart der Produktionsanlage (1) vorliegt in Form wenigstens einer der nachstehenden Angaben:
- Änderung der Produktionsart, Änderung der Komponenten der Produktionszelle, insbesondere des Werkzeugs oder der Peripheriegeräte, Änderung des Bedienpersonals, Änderung einer Regelungsart, Änderung des Ablaufs, Durchführung von Wartungen, Kommentare des Benutzers, Überschreiten von Überwachungs- oder Warngrenzen, Ausschuss
- Einfahrzyklen oder automatische Prozessoptimierungen durch Assistenzsysteme, Aktivität von Peripheriegeräten (z.B. Materialfördergeräten), automatische Durchführung regelmäßiger Vorgänge wie Schmierung von Komponenten
- Regelungsart eines Durchflussreglers oder Regelungsart eines Prozessreglers, beispielsweise zur automatischen Regelung eines eingespritzten Volumens, Vorliegen von Alarmen an der Formgebungsmaschine oder eines Peripheriegerätes

11. Vorrichtung nach wenigstens einem der Ansprüche 7 bis 10, wobei die Visualisierung des Hinweises (9) nur für den Fall erfolgt, dass eine Beeinträchtigung einer Stabilität des Prozesszustandes zu einem bestimmten Zeitpunkt oder für eine bestimmte Zeitspanne vorliegt, insbesondere dann, wenn sie auf einen der relevanten Faktoren zurückzuführen ist.

12. Vorrichtung nach wenigstens einem der Ansprüche 7 bis 11, wobei jede ausgewählte Prozessgröße durch die Recheneinheit (4) wenigstens einer logischen Gruppe zugeordnet wird, wobei
- zumindest zwei verschiedene logische Gruppen vorgesehen werden
- vorzugsweise vorgesehen ist, dass logische Gruppen in wenigstens zwei Hierarchieebenen angeordnet werden, derart, dass zumindest eine logische Gruppe einer niedrigeren Hierarchieebene einer anderen logischen Gruppe einer höheren Hierarchieebene zugeordnet ist
- für jede logische Gruppe durch die Recheneinheit (4) ein Zustand der logischen Gruppe auf Basis der dieser logischen Gruppe zugeordneten Prozessgrößen beurteilt und/oder visualisiert wird

13. Produktionsanlage, die mit einer Vorrichtung nach wenigstens einem der Ansprüche 7 bis 12 mittels einer Datenverbindung (7) in datenübertragender Verbindung steht oder eine solche Vorrichtung aufweist.

14. Computerprogramm umfassend Befehle, die bei der Ausführung des Programms durch einen Computer diese dazu veranlassen, das Verfahren nach wenigstens einem der Ansprüche 1 bis 6 auszuführen oder den Computer als Vorrichtung nach wenigstens einem der Ansprüche 7 bis 12 zu konfigurieren.

15. Computerlesbarer Datenträger, insbesondere Speichermedium (6), auf dem das Computerprogramm nach dem vorangehenden Anspruch gespeichert ist.

16. Datenträgersignal, das das Computerprogramm nach Anspruch 15 überträgt.
